Europäisches Patentamt

European Patent Office

Office européen des brevets

(11) Publication number: **0 047 628**
**B1**

## (12) EUROPEAN PATENT SPECIFICATION

(45) Date of publication of patent specification: **13.03.85**

(51) Int. Cl.⁴: **B 62 D 33/06,** B 62 D 25/00

(21) Application number: **81304004.5**

(22) Date of filing: **02.09.81**

(54) Mounting for the body structure of a motor vehicle.

(30) Priority: **06.09.80 GB 8028857**

(43) Date of publication of application:
**17.03.82 Bulletin 82/11**

(45) Publication of the grant of the patent:
**13.03.85 Bulletin 85/11**

(84) Designated Contracting States:
**BE DE FR GB NL SE**

(56) References cited:
**DE-A-2 161 953**
**DE-A-2 229 436**
**DE-U-8 002 566**
**GB-A-1 419 796**
**US-A-3 948 341**

(73) Proprietor: **FORD MOTOR COMPANY LIMITED**
**Eagle Way**
**Brentwood Essex CM13 3BW (GB)**
(84) **BE GB NL SE**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Allen, Denis Lyn Crundall**
**17 Westerings Purleigh**
**Chelmsford Essex CM3 6PG (GB)**

(74) Representative: **Drakeford, Robert William et al**
**Ford Motor Company Limited 15/448, Research**
**& Engineering Centre Laindon**
**Basildon Essex SS15 6EE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 047 628 B1

## Description

This invention relates to motor vehicles, especially trucks, having a chassis and a body structure, such as a cab, mounted thereon.

One problem which is encountered in the design of suitable connections between the cab and the chassis is that, if the connections are too rigid, the cab is subjected to undesirably high stresses which can damage the structure of the cab. One source of such stress is the twisting of the chassis about its longitudinal axis. This is particularly acute in the case of a body structure secured to the chassis at four points.

US—A—3948341 and GB—A—1419796 disclose trucks with a driver's cab in which the cab may be tilted relative to the chassis, thereby allowing access to parts of the vehicle beneath the cab. In each case the cab is connected to the chassis by a bar which is connected to the cab by two transversely spaced connections and to the chassis by two further transversely spaced connections which are positioned rearwardly therefrom.

According to the present invention there is provided a motor vehicle comprising a chassis and a body structure mounted thereon by a bar which is connected to the chassis by two transversely spaced connections and which is connected to the body structure by two further transversely spaced connections, the said further connections being offset forwardly and rearwardly respectively from a line joining the connections between the chassis and the bar.

Because the connections between the cab and the bar are offset forwardly and rearwardly from the line joining the connection between the chassis and the bar, the bar can accommodate twisting movement of the chassis relative to the body structure.

Although the invention is especially applicable to the mounting of cabs on motor vehicles such as trucks, it could be applied to any other body structure, for example to van or coach bodies.

In the case of a cab, two of the connections between the bar and either the body structure or the chassis may be pivotable to allow the body structure to be tilted relative to the chassis.

In order to reduce the transmission of vibrations from the chassis to the body structure, and to damp the movement of the body structure relative to the chassis, the connections between the bar and either the body structure or (preferably) the chassis may include a bush of resiliently deformable material (e.g. rubber). Further, the bar may, if desired, be constructed as a torsion bar so that connection between the body structure and the chassis is sprung.

In its simplest form, the bar comprises a straight central section, a radially rearwardly directed section at one end thereof and a radially forwardly directed section at the other end thereof to which the connections to the body structure are preferably attached. With such a construction, compact connections between the chassis and the bar may be formed by a bracket mounted on the chassis, and a bush connecting the bar to the bracket, the rearwardly — or forwardly — directed sections of the bar being housed within respective ones of the brackets. In order to allow the ends of the forwardly or rearwardly directed sections of the bar to move easily relative to the brackets the bushes preferably include an aperture.

A preferred embodiment of the invention will now be described, by way of example only, with reference to the accompanying drawings, in which:—

Figure 1 is a schematic perspective view of a vehicle in accordance with the invention;

Figure 2 is a cross section along line II—II of Figure 1 on an enlarged scale;

Figure 3 is a cross-section along line III—III of Figure 2 and

Figure 4 is a schematic plan of part of the vehicle of Figure 1.

Referring to the drawings, a truck comprises a chassis 1, having two longitudinally extending, transversely spaced frame members 2, 3. A cab 4 is mounted on the chassis 1 by means of two rear transversely spaced mounting brackets (not shown) each of which carries a latch for engaging with a respective keeper 5, 6 mounted on the frame members 2, 3, as for example, described in our British patent application No: 7920799 (GB—A—2055136).

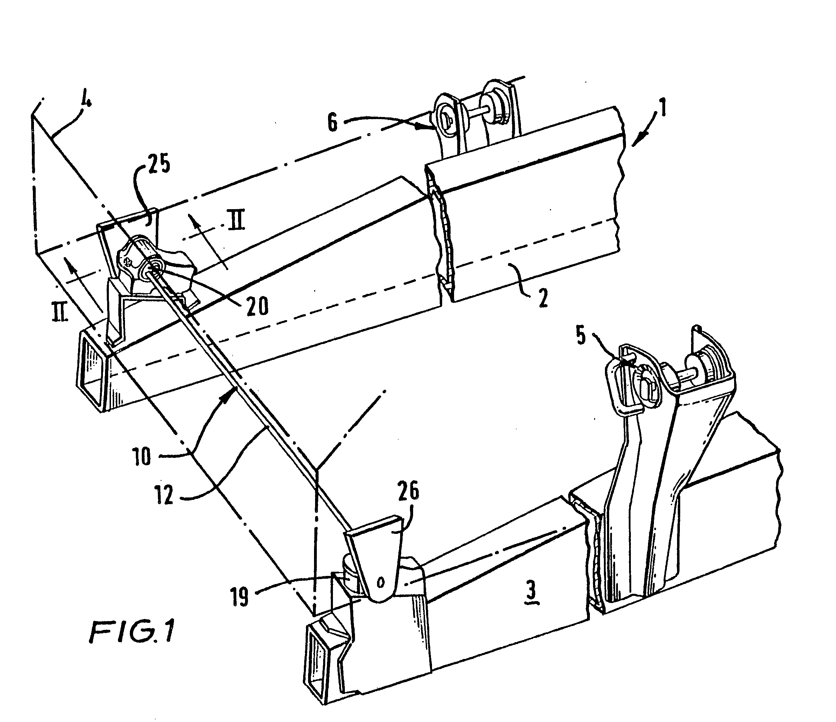

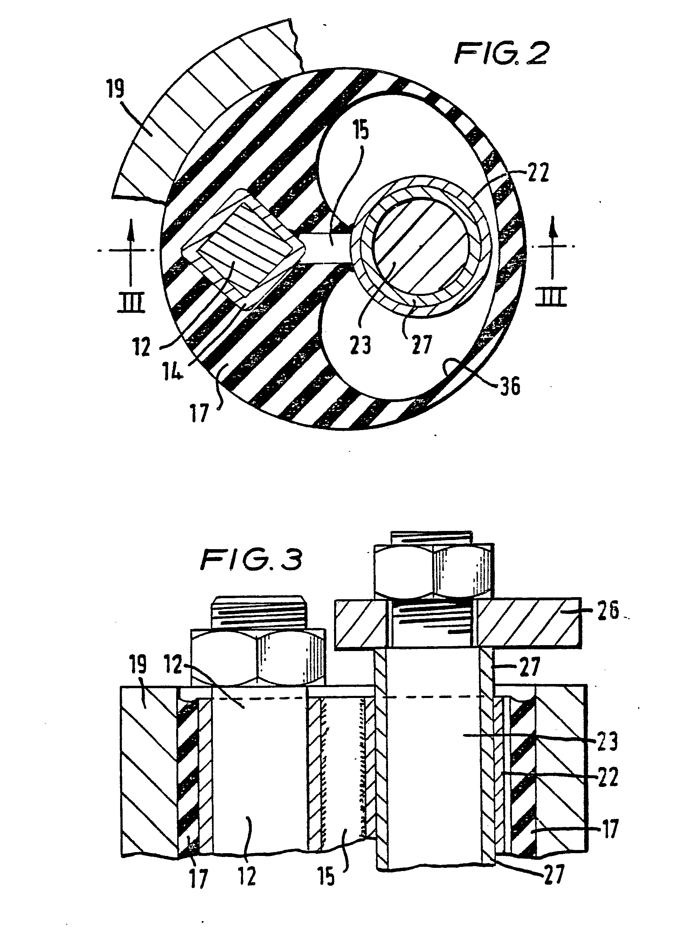

At its forward end, the cab 4 is mounted on the chassis 1 by means of a torsion bar 10 extending transversely to the chassis members 2, 3. The bar 10 includes a straight central section 12 of square cross-section (Figure 1) and, as shown in Figures 2 and 3, the opposite ends of the central cross-section 12 carry square sleeves 14 to which are welded plate sections 15, 16 which respectively extend radially forwardly and rearwardly from the bar 10.

The sleeves 14 and the plate section 15, 16 are moulded into bushes 17 of rubber, or similar resiliently deformable material, which are in turn mounted in brackets 19, 20 secured to respective ones of the chassis members 2, 3. The plate sections 15, 16 are therefore housed within the brackets 19, 20 thus avoiding overhang.

The ends of the plate sections 15, 16 are attached to journals 22 in each of which is received a pin 23, 24 which are bolted to respective brackets 25, 26 on the cab 4. The pins 23, 24 are positioned in the journals 22 by means of bearing liners 27, 28 which allow the pins 23, 24 to pivot in the journals 22. This allows the cab 4 to be tilted relative to the chassis 1. The bushes 17 include apertures 36 which allow the journals 21, 22 to move freely relative to the brackets 25, 26.

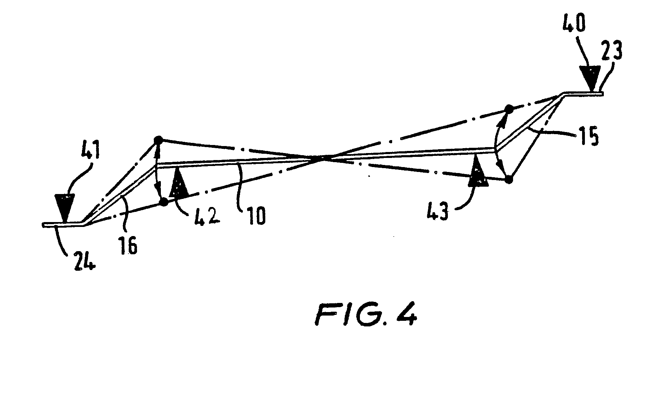

The operation of the front mounting is shown in Figure 4 which illustrates schematically the relationship between the cab 4, the chassis 1 and the bar 10 and their connections thereto. The two transversely spaced connections 40, 41 between the cab 4 and the torsion bar 10, are formed by the cab brackets 25, 26, journals 22 and pins 23, 24.

The connections 43, 44 between the chassis 1 and the bar 10 are formed by the brackets 19, 20, and the bushes 17. As can be seen in Figure 4, the connections 40, 41 are respectively offset in opposite directions (i.e. forwardly and rearwardly) from the line joining the other two connections 43, 44.

Consequently, if one of the connections 43, 44 is raised and the other is lowered, as occurs during twisting of the chassis 1 about its longitudinal axis, this movement is accommodated by deflection of the ends of the central section of the bar 10 and rotation of the plate sections 15, 16 relative to the cab brackets 25, 26, thus producing no net displacement of the cab 4. The cab is not therefore subjected to stress if the chassis 1 is twisted.

Since the bar 10 is also a torsion bar, and is mounted in resilient bushes 17, the bar and bushes also provide a sprung connection between the chassis 1 and the cab. Additionally, the bushes 17 serve to damp vibrations transmitted from the chassis 1 to the cab 4.

## Claims

1. A motor vehicle comprising a chassis (1) and a body structure (4) mounted thereon by a bar (10) which is connected to the chassis (1) by two transversely spaced connections (17—20, 42, 43) and which is connected to the body structure by two further transversely spaced connections (21—26, 40, 41), characterised in that the said further connections (21—26, 40, 41) are off-set forwardly and rearwardly respectively from a line joining the connections (17—20, 42, 43) between the chassis (1) and the bar (10).

2. A motor vehicle according to Claim 1 wherein the body structure comprises a cab (4).

3. A motor vehicle according to Claim 1 or Claim 2 wherein one of the connections (17—20, 42, 43) between the bar and either the body structure (4) or the chassis on each side of the vehicle are pivotable to allow the body structure (4) to be tilted relative to the chassis (1).

4. A motor vehicle according to any one of claims 1 to 3 wherein the bar (10) comprises a torsion bar.

5. A motor vehicle according to any one of claims 1 to 4 wherein the connections (17—26, 40—43) between the bar (10) and the chassis (1) or the body structure (4) include a bush (17, 18) of resiliently deformable material.

6. A motor vehicle according to any one of claims 1 to 5 wherein the bar (10) comprises a straight central section (12), a radial rearwardly directed section (16) at one end thereof and a radial forwardly directed section (15) at the other end thereof.

7. A motor vehicle according to Claim 6 wherein the connections (17—20, 42, 43) between the chassis (1) and the bar (10) each comprise a bracket (19, 20) mounted on the chassis (1) and a bush (17, 18) connecting the bar (10) to the bracket (19, 20), the rearwardly and forwardly directed sections (15, 16) of the bar (10) being positioned within a respective one of the brackets (19, 20).

8. A motor vehicle according to Claim 7 wherein the bush (17, 18) includes an aperture (36, 37) permitting movement of the ends of the said section (15, 16) relative to the bracket (19, 20).

9. A motor vehicle according to any one of claims 6 to 8 wherein the ends of the rearwardly and forwardly directed sections (15, 16) carry a respective bracket (25, 26) for securing the body structure to the bar.

## Patentansprüche

1. Ein Kraftfahrzeug, das ein Chassis (1) und einen Aufbau (4) umfaßt, der am Chassis über einen Träger (10) befestigt ist, der mit dem Chassis (1) durch zwei quer angeordnete Verbindungsstücke (17—20, 42, 43) und mit dem Aufbau (4) durch zwei zusätzliche, quer angeordnete Verbindungsstücke (21—26, 40, 41) verbunden ist, dadurch gekennzeichnet, daß die genannten, zusätzlichen Verbindungsstücke (21—26, 40, 41) von einer Linie aus, die die Verbindungsstücke (17—20, 42, 43) zwischen dem Chassis (1) und dem Träger (10) verbindet, nach vorne bzw. nach hinten versetzt sind.

2. Ein Kraftfahrzeug gemäß Anspruch 1, wobei der Aufbau eine Fahrerkabine (4) umfaßt.

3. Ein Kraftfahrzeug gemäß Anspruch 1 oder Anspruch 2, wobei eines der Verbindungsstücke (17—20, 42, 43) zwischen dem Träger und entweder dem Aufbau (4) oder dem Chassis auf jeder Seite des Fahrzeugs angelenkt ist, so daß der Aufbau (4) im Verhältnis zum Chassis (1) gekippt werden kann.

4. Ein Kraftfahrzeug gemäß irgendeinem der Ansprüche 1—3, wobei der Träger (10) einen Drehstab umfaßt.

5. Ein Kraftfahrzeug gemäß irgendeinem der Ansprüche 1—4, wobei die Verbindungsstücke (17—20, 40—43) zwischen dem Träger (10) und dem Chassis (1) oder dem Aufbau (4) eine Buchse (17, 18) aus elastisch verformbarem Material umfassen.

6. Ein Kraftfahrzeug gemäß irgendeinem der Ansprüche 1—5, wobei der Träger (10) ein gerades Mittelteil (12), ein radiales, nach rückwärts weisendes Teil (16) an einem Ende und ein radiales, nach vorwärts weisendes Teil (15) am anderen Ende umfaßt.

7. Ein Kraftfahrzeug gemäß Anspruch 6, wobei die Verbindungsstücke (17—20, 42, 43) zwischen dem Chassis (1) und dem Träger (10) je eine am Chassis (1) befestigte Halterung (19, 20) und eine Buchse (17, 18) zur Verbindung zwischen dem Träger (10) und der Halterung (19, 20) umfassen, wobei die nach rückwärts und vorwärts weisenden Teile (15, 16) des Trägers (10) jeweils in einer der Halterungen (19, 20) ruhen.

8. Ein Kraftfahrzeug gemäß Anspruch 7, wobei die Buchse (17, 18) eine Öffnung (36, 37) umfaßt, die eine Bewegung der Enden des genannten Teils (15, 16) im Verhältnis zur Halterung (19, 20) zuläßt.

9. Ein Kraftfahrzeug gemäß irgendeinem der Ansprüche 6—8, wobei die Enden der nach rückwärts und vorwärts weisenden Teile (15, 16) eine entsprechende Halterung (25, 26) zur Befestigung des Aufbaus am Träger aufweisen.

**Revendications**

1. Véhicule à moteur comprenant un châssis (1) et une carrosserie (4) montée sur le châssis par une barre (10) qui est reliée au châssis (1) par deux liaisons transversalement espacées (17—20, 42, 43) et qui est reliée à la carrosserie par deux autres liaisons transversalement espacées (21—26, 40, 41), caractérisé en ce que ces autres liaisons (21—26, 40, 41) sont décalées respectivement vers l'avant et vers l'arrière d'une ligne reliant les liaisons (17—20, 42, 43) entre la châssis (1) et la barre (10).

2. Véhicule à moteur suivant la revendication 1, dans lequel la carrosserie est une cabine.

3. Véhicule à moteur suivant la revendication 1 ou 2, dans lequel une des liaisons (17—20, 42, 43) entre la barre et la carrosserie (4) ou le châssis de chaque côté du véhicule peut pivoter afin de permettre à la carrosserie (4) de basculer par rapport au châssis (1).

4. Véhicule à moteur suivant l'une quelconque des revendications 1 à 3, dans lequel la barre (10) est une barre de torsion.

5. Véhicule à moteur suivant l'une quelconque des revendications 1 à 4, dans lequel les liaisons (17—26, 40—43) entre la barre (10) et la châssis (1) ou la carrosserie (4) comprennent une douille (17, 18) en matière élastiquement déformable.

6. Véhicule à moteur suivant l'une quelconque des revendications 1 à 5, dans lequel la barre (10) comprend une section médiane droite (12), une section radiale dirigée ver l'arrière (16) à une extrémité et une section radiale dirigée vers l'avant (15) à l'autre extrémité.

7. Véhicule à moteur suivant la revendication 6, dans lequel les liaisons (17—20, 42, 43) entre le châssis (1) et la barre (10) comprennent chacune une console (19, 20) montée sur le châssis (1) et une douille (17, 18) reliant la barre (10) à la console (19, 20), les sections orientées vers l'arrière et vers l'avant (15, 16) de la barre (10) étant placées chacune dans une des consoles (19, 20).

8. Véhicule à moteur suivant l'une quelconque des revendications 7, dans lequel la douille (17, 18) comprend une ouverture (36, 37) permettant le déplacement des extrémités de la section (15, 16) par rapport à la console (19, 20).

9. Véhicule à moteur suivant l'une quelconque des revendications 6 à 8, dans lequel les extrémités des sections orientées vers l'arrière et vers l'avant (15, 16) portent chacune une console (25, 26) destinée à fixer la carrosserie à la barre.

FIG.1

0 047 628

*FIG.2*

*FIG.3*

FIG. 4